Europäisches Patentamt

European Patent Office

Office européen des brevets

(11) Publication number: **0 466 373 A2**

# EUROPEAN PATENT APPLICATION

(21) Application number: **91305920.0**

(22) Date of filing: **01.07.91**

(51) Int. Cl.5: **F16L 3/00**

(30) Priority: **12.07.90 DE 4022173**

(43) Date of publication of application:
**15.01.92 Bulletin 92/03**

(84) Designated Contracting States:
**DE FR GB IT**

(71) Applicant: **EMHART INC.**
**Drummond Plaza Office Park, 1423, Kirkwood Highway**
**Newark, Delaware 19711(US)**

(72) Inventor: **Schäty, Harald**
**Neuer Weg 4,**
**W-6330 Wetzlar 17,(DE)**

(74) Representative: **Wetters, Basil David Peter et al**
**Emhart Patents Department, Lyn House, 39, The Parade**
**Oadby, Leicester LE2 5BB(GB)**

(54) **Fastening device.**

(57) A fastening device which is joined directly to the engine block, for example via a bar fastened to the engine block, consists of three parts, namely a) two integrated annular discs each with a respective internal ring, b) a cross-shaped holder and c) a clip securing the fuel lines. The holder with the clip fixed on it is arranged so as to be movable to a limited extent in all directions in a horizontal plane relative to the rest of the arrangement.

FIG. 5

EP 0 466 373 A2

The invention relates to a fastening device with a clip for elongate articles, particularly for the retention of fuel lines on a car engine block having a holding arrangement.

Fastening devices used until now in practice allow movement of the clip holding the fuel lines by using a slot and have the drawback that such relative movement leads to undesirable friction which destroys the coating, for example of a fastening bracket, and therefore gives rise to the risk of corrosion.

Accordingly, it is an object of the present invention to provide a fastening device of the type outlined above with which, for example, fuel lines are to be held in their set position without friction being able to occur between the lines and the clip, where the fastening device is not technically complex and can be assembled and mounted in a very simple manner.

According to the present invention, a fastening device with a clip for elongate articles is provided with two axially spaced, mutually joined annular discs which define between themselves a cavity for receiving a holder in the cavity with clearance fit, in that a receiving orifice for an expanding foot of the clip housing is provided on the holder and in that internal rings which cover the cavity on both sides are fixed on the two annular discs.

An important advantage of this device according to the invention is that the fuel lines are always held in their correct position without having to participate in the vibrations of an engine, for example when starting or during acceleration. For this purpose, the holder on which the clip holding the fuel lines is fixed, is movable within limits in a horizontal plane and in all directions in the cavity between the two annular discs, the limits to this movement being defined by the webs joining the two annular discs together and by the expanding head being able to touch the internal surface of the internal ring and the webs thereof.

Preferably, the fastening device is made entirely of plastics material and is produced by injection moulding.

Preferred embodiments of the invention will now be described in greater detail by way of example and with reference to the accompanying drawings, in which:-

Figure 1 shows a fastening device according to the present invention in plan view;

Figure 2 shows the fastening device of Figure 1 as viewed from the side;

Figure 3 shows a cross-shaped holder for retention in the device of Figure 1;

Figure 3a shows the holder of Figure 3, as viewed from the side;

Figure 4 shows a side view of a clip for receiving fuel lines and including an expanding foot;

and

Figure 5 shows a plan view of a fastening device similar to Figure 1 but with an inserted holder on which a clip according to Figure 4 is fixed.

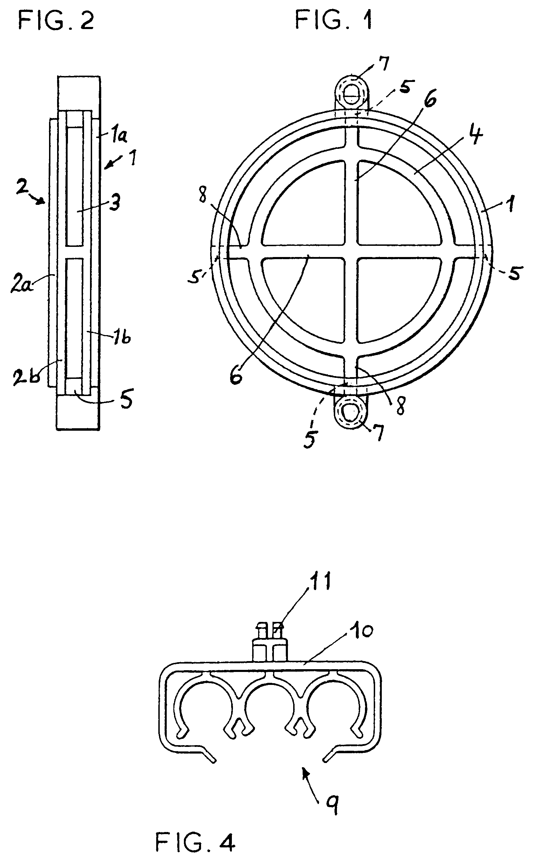

As shown in Figure 1, the fastening device consists of an upper annular disc 1 and a lower annular disc 2, an internal ring 4 being secured inside the central passage, this ring 4 having webs 6 and projections 8 serving to fix the internal ring 4 to the respective annular disc 1, 2. Each annular disc 1, 2 consists of two portions 1a, 1b and 2a, 2b. However, as shown in Figure 2, these portions which have the same internal diameter are offset in their outer periphery so that the respective outer portion 1a, 2a of the two annular discs have a smaller external diameter than the associated portions 1b, 2b. It should be emphasised that the individual portions are not separate components, but that the annular discs are in one piece and are joined together at four points by means of webs 5. A cavity 3 having a purpose which will be described hereinafter is therefore formed between the two annular discs 1, 2, as shown, in particular, in Figure 2.

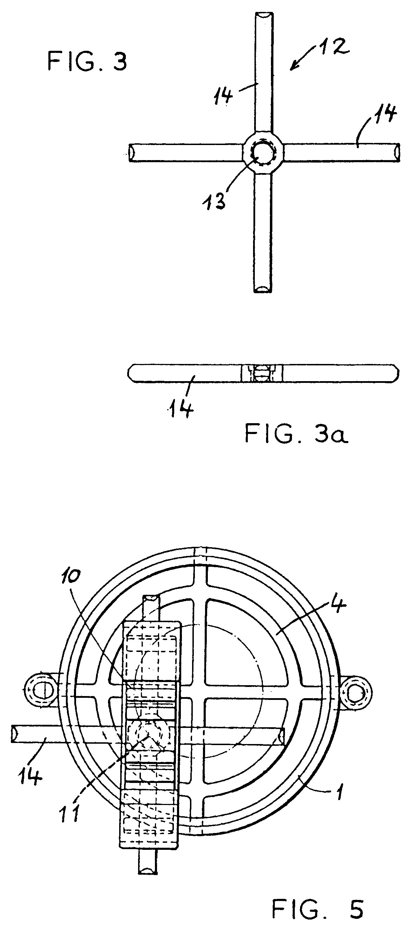

As shown in Figure 3, a cross-shaped holder 12, of which the spokes 14 are mutually spaced at 45° and having pointed or rounded ends, is also provided. The axial thickness of the cross is somewhat smaller than the depth of the cavity. The holder has also a receiving orifice 13 for an expanding foot 11 (Figure 4) which is provided on the base 10 of a clip 9 adapted to receive the actual fuel lines. As the fastening device is assembled, the holder is initially inserted into cavity 3 and the expanding foot 11 is pressed into receiving orifice 13 so that clip housing 9 is detachably joined to holder 12.

In the assembled state (Figure 5), movement of the holder 12 with a clip housing arranged thereon is free, and holder 12 is movable in all directions without it being able to leave the arrangement consisting of the two annular discs 1, 2 and the internal ring 4. This, therefore, ensures that this arrangement, which is rigidly joined to the engine block via projections 7 on the periphery of the annular discs 1, 2 via a bar (not shown) fastened to the engine block absorbs the vibrations produced by the engine, and these vibrations cannot be transmitted to the holder 12 which holds the clip housing and is somewhat thinner in construction than the depth of the cavity 3. In particular, the clip housing does not rub against the fuel lines and the coated fastening profile which is fixed on the engine housing.

Expanding foot 11 makes clip housing 10 detachable from the cross-shaped holder so that, for example, the removal of defective fuel lines is facilitated.

The fastening arrangement as shown in Figure 1 can be produced, for example by injection moulding of a suitable plastics material and the fastening device consists of three separate components, namely of the annular discs 1, 2 with integrated internal ring 4, the cross-shaped holder 12 and also the clip housing 10. The two internal rings 4 provided in each case on the two annular discs 1, 2 serve to cover the holder when it is installed.

## Claims

1. Fastening device with a clip, for elongate articles particularly for the retention of fuel lines on a car engine block having a holding arrangement, characterised by two axially spaced, mutually joined annular discs (1, 2) which define between themselves a cavity (3) for receiving a holder (12) which is a clearance fit in the cavity (3), in that a receiving orifice (13) for an expanding foot (11) of the clip housing (10) is provided on the holder (12) and in that internal rings (4) which cover the cavity (3) on both sides are fixed on the two annular discs (1, 2).

2. Fastening arrangement according to claim 1, wherein each annular disc (1, 2) comprises two hollow cylindrical portions (1a, 1b; 2a, 2b) which are integral with one another and have the same internal diameter but different external diameters and wherein the respective outer portion (1a, 2a) has the smaller external diameter.

3. Fastening arrangement according to claim 1, wherein the holder (12) is constructed in the form of a cross of which the spokes (14) are pointed or rounded at their ends and in that the axial thickness of the cross is somewhat smaller than the depth of the cavity (3).

4. Fastening arrangement according to claim 1, wherein the two annular discs (1, 2) are congruent and are joined together by webs (5).

5. Fastening arrangement according to claim 1, wherein each internal ring (4) is reinforced by internal webs (6) with angular spacings of 45° in each case and comprises projections (8) on its outer periphery which serve to fix the internal ring on the annular discs (1, 2).

6. Fastening arrangement according to any one of the preceding claims, wherein all components are formed from plastics material.

EP 0 466 373 A2

FIG. 2

FIG. 1

FIG. 4

4

FIG. 3

FIG. 3a

FIG. 5